# EUROPÄISCHE PATENTSCHRIFT

(11) **EP 2 953 808 B1**
(45) Veröffentlichungstag und Bekanntmachung des Hinweises auf die Patenterteilung: **08.11.2017**
(21) Anmeldenummer: 14700810.6
(22) Anmeldetag: 18.01.2014
(51) Int. Cl.: B60K 11/08, F01P 11/10

(54) **VERFAHREN ZUM BETRIEB EINER KÜHLERGRILLANORDNUNG EINES FAHRZEUGES**
METHOD FOR OPERATING A RADIATOR GRILLE ASSEMBLY OF A VEHICLE
PROCÉDÉ POUR FAIRE FONCTIONNER UN DISPOSITIF DE CALANDRE D'UN VÉHICULE

(30) Priorität: 08.02.2013 DE 102013002362
(43) Veröffentlichungstag der Anmeldung: 16.12.2015
(73) Patentinhaber: Daimler AG, 70327 Stuttgart (DE)
(72) Erfinder: JAKOBS, Holger, 72135 Dettenhausen (DE)
(74) Vertreter: JENSEN & SON
(86) Internationale Anmeldenummer: PCT/EP2014/000132
(87) Internationale Veröffentlichungsnummer: WO 2014/121892

(56) Entgegenhaltungen:
- DE-A1-102005 034 775
- DE-A1-102011 122 815
- DE-A1-102013 214 754
- US-A1- 2012 270 490

## Beschreibung

Die Erfindung betrifft ein Verfahren zum Betrieb einer Kühlergrillanordnung eines Fahrzeuges, welche zumindest einen Hauptlufteinlass und eine Anzahl von Verschlussklappen umfasst, die mittels zumindest eines Aktors zwischen einer Verschlussstellung und einer Öffnungsstellung bewegt werden, gemäß Oberbegriff des Anspruchs 1.

Aus der DE 10 2012 012 677 A1 ist eine Kühlergrillanordnung für ein Fahrzeug und ein Verfahren zum Betrieb einer solchen Kühlergrillanordnung bekannt. Die Kühlergrillanordnung umfasst zumindest einen einen Hauptlufteinlass einfassenden Tragrahmen, eine Anzahl von Verschlussklappen, die zwischen einer Verschlussstellung und einer Öffnungsstellung um eine Klappendrehachse drehbar gelagert sind, wobei an den Verschlussklappen Klappenhebel angeformt oder ausgebildet sind, die mit einem Schubriegel in Wirkverbindung stehen, und einen Aktor, mittels dessen die Verschlussklappen positioniert werden.

Aus der gattungsbildenden DE 10 2011 122 815 A1 und der DE10 2012 206 367 A1 geht jeweils eine Kühlergrillanordnung der hier angesprochenen Art hervor, bei der bereits die Gefahr des Einfrierens und somit des Blockierens der zum Absperren eines Hauptlufteinlasses vorgesehenen Verschlussklappen bei tiefen Umgebungstemperaturen erkannt wurde. Um das Blockieren der Verschlussklappen in einer ungewollten Stellung zu vermeiden, werden die Verschlussklappen bei Unterschreiten einer bestimmten Umgebungstemperatur ungeachtet der Fahrzeuggeschwindigkeit und -belastung, also des tatsächlichen Kühlungsbedarfs der zu kühlenden Aggregate, in eine vorbestimmte Offenstellung bewegt, die sich zwischen der vollständig geöffneten und der vollständig geschlossenen Stellung der Verschlussklappen befindet. Damit wird sichergestellt, dass bei tiefen Temperaturen der Hauptlufteinlass zu keiner Zeit vollständig geschlossen ist, so dass auch dann ein den Luftwiderstand des Fahrzeugs erhöhender Luftstrom über den Hauptlufteinlass in das Fahrzeug einströmt, auch wenn dieser für die Kühlung von Aggregaten gerade nicht benötigt wird.

Der Erfindung liegt die Aufgabe zugrunde, ein gegenüber dem Stand der Technik verbessertes Verfahren zum Betrieb einer Kühlergrillanordnung eines Fahrzeuges anzugeben.

Zur Lösung der Aufgabe wird ein Verfahren mit den in Anspruch 1 angegebenen Merkmalen vorgeschlagen. Vorteilhafte Ausgestaltungen der Erfindung sind Gegenstand der Unteransprüche.

Ein Verfahren zum Betrieb einer Kühlergrillanordnung eines Fahrzeuges, welche zumindest einen Hauptlufteinlass und eine Anzahl von Verschlussklappen umfasst, sieht vor dass die Verschlussklappen mittels zumindest eines Aktors zwischen einer Verschlussstellung und einer Öffnungsstellung bewegt werden. Erfindungsgemäß wird ein Referenzbewegungsablauf des zumindest eines Aktors in Abhängigkeit einer vorgegebenen Temperatur durchgeführt.

Unter dem Referenzbewegungsablauf des Aktors ist zu verstehen, dass die Verschlussklappen zur Referenzierung des Aktors von der Verschlussstellung in die Öffnungsstellung und zurück verfahren werden.

Um zu vermeiden, dass durch den Referenzbewegungsablauf des zumindest einen Aktors Teile der Kühlergrillanordnung insbesondere aufgrund von witterungsbedingten Einflüssen, wie Schnee und Eis beschädigt werden, wird der Referenzbewegungsablauf in Abhängigkeit der vorgegebenen Temperatur durchgeführt.

In besonders vorteilhafter Weise wird der Referenzbewegungsablauf bei einer vorgegebenen Temperatur, insbesondere einer Umgebungstemperatur, oberhalb des Gefrierpunktes durchgeführt, so dass die Gefahr einer Beschädigung von Teilen der Kühlergrillanordnung durch Schnee und/oder Eis zumindest verringert ist.

Durch das Verfahren ist die Betriebssicherheit der Kühlergrillanordnung erhöht, wobei das Risiko mechanischer Beschädigungen durch Öffnen und Schließen der Verschlussklappen, die anhand einer aktorabhängigen Auslösung des Referenzbewegungsablaufes verursacht wird, minimiert wird.

Die Referenzierung des Aktors wird auf ein Öffnen der Verschlussklappen begrenzt, die durch technische Erfordernisse des Fahrzeuges, insbesondere des Kühlsystems, begründet sind.

Ausführungsbeispiele der Erfindung werden im Folgenden anhand einer Zeichnung näher erläutert.

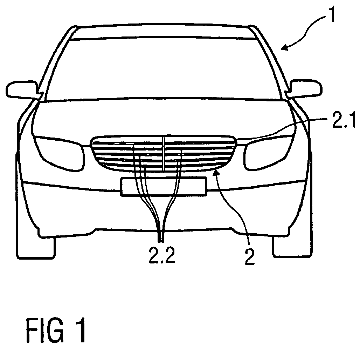

In der einzigen Figur ist schematisch ein Fahrzeug 1 mit einer im Frontbereich angeordneten Kühlergrillanordnung 2 gezeigt. Die Kühlergrillanordnung 2 besteht zumindest aus einem einen Hauptlufteinlass einfassenden Tragrahmen 2.1, Verschlussklappen 2.2, welche in dem vorliegenden Ausführungsbeispiel eine Verschlussstellung aufweisen, und einem nicht gezeigten Stellantrieb als Aktor, der mit den Verschlussklappen 2.2 gekoppelt ist und mittels dessen die Verschlussklappen 2.2 positionierbar sind.

Eine derartige Kühlergrillanordnung 2 dient dazu, die Haupteinlassöffnung in Abhängigkeit von Betriebszuständen des Fahrzeuges 1 zu öffnen und zu verschließen. Insbesondere wird die Haupteinlassöffnung bei einem geringen Wärmeaufkommen oder bei ausgeschalteter Brennkraftmaschine verschlossen, um eine unnötige Kühlung durch Fahrtwind und/oder einen unerwünschten Wärmeaustritt durch die Haupteinlassöffnung zu vermeiden. Darüber hinaus kann ein Verschließen der Haupteinlassöffnung zu einer erheblichen Verbesserung des Luftwiderstandsbeiwertes, des sogenannten c_{w-}Wertes des Fahrzeuges 1 bei vergleichsweise hoher Fahrgeschwindigkeit führen.

Die Kühlergrillanordnung 2 weist zwei Klappenreihen auf, die jeweils die gleiche Anzahl von Verschlussklappen 2.2 umfassen und nebeneinander angeordnet sind.

Die Verschlussklappen 2.2 sind zwischen der Verschlussstellung und einer nicht näher dargestellten Öffnungsstellung innerhalb ihrer Klappenreihe schwenkbar gelagert, wobei die Verschlussklappen 2.2 horizontal schwenkbar gelagert sind.

Bei dem Aktor als Stellantrieb handelt es sich um einen selbst referenzierenden Aktor, wobei die Verschlussklappen 2.2 bei einem Referenzbewegungsablauf des Aktors von der Verschlussstellung in die Öffnungsstellung und wieder zurück positioniert werden.

Sind Bestandteile der Kühlergrillanordnung 2 beispielsweise vereist und/oder es liegt Schnee darauf, besteht die Gefahr, dass ein oder mehrere Bestandteile bei Durchführung des Referenzbewegungsablaufes mechanisch beschädigt werden.

Um die Gefahr mechanischer Beschädigungen aufgrund eines bei Eis und/oder Schnee durchgeführten Referenzbewegungsablaufes des Aktors zumindest verringern zu können, ist vorgesehen, den Referenzbewegungsablauf in Abhängigkeit einer vorgegebenen Temperatur durchzuführen. Beispielsweise ist die vorgegebene Temperatur 0°C.

Insbesondere ist hierzu vorgesehen, dass der Referenzbewegungsablauf aufgrund einer technischen Erforderlichkeit des Fahrzeuges 1, insbesondere seines Kühlsystems durchgeführt wird. Das heißt, dass der Referenzbewegungsablauf bei einer ersten von dem Kühlsystem initiierten Anforderung zum Öffnen der Verschlussklappen 2.2 durchgeführt wird. Das Öffnen der Verschlussklappen 2.2 dient dabei einem Kühlen von Motorkomponenten des Fahrzeuges 1.

Eine eventuell vorhandene Notöffnungsfunktion des Aktors, bei welcher sich die Verschlussklappen 2.2 in der Öffnungsstellung befinden, verbleibt als mögliche Alternative bei geparktem Fahrzeug 1 in ihrer Betriebsposition und wird in geeigneter Art und Weise verriegelt.

In einer weiteren möglichen Alternative wird der Aktor bei einer vorherrschenden Umgebungstemperatur um den Gefrierpunkt nicht angesteuert, so dass die Verschlussklappen 2.2 in der Verschlussstellung verbleiben.

Mittels der temperaturabhängigen Durchführung des Referenzbewegungsablaufes wird das Risiko einer mechanischen Beschädigung von Bestandteilen der Kühlergrillanordnung, insbesondere der Antriebsmechanik, aufgrund von Eis und/oder Schnee verringert.

## Patentansprüche

1. Verfahren zum Betrieb einer Kühlergrillanordnung (2) eines Fahrzeuges (1), umfassend zumindest einen Hauptlufteinlass und eine Anzahl von Verschlussklappen (2.2), die mittels zumindest eines Aktors zwischen einer Verschlussstellung und einer Öffnungsstellung bewegt werden, wobei ein Referenzbewegungsablauf des zumindest einen Aktors in Abhängigkeit einer vorgegebenen Temperatur durchgeführt wird, **dadurch gekennzeichnet, dass** bei dem Referenzbewegungsablauf die Verschlussklappen zur Referenzierung des Aktors von der Verschlussstellung in die Öffnungsstellung und zurück verfahren werden.

2. Verfahren nach Anspruch 1,
**dadurch gekennzeichnet, dass** der Referenzbewegungsablauf des zumindest einen Aktors in Abhängigkeit einer erfassten Temperatur eines in einem Kühlsystem des Fahrzeuges (1) zirkulierenden Kühlmittels durchgeführt wird.

3. Verfahren nach Anspruch 2,
**dadurch gekennzeichnet, dass** der Referenzbewegungsablauf des zumindest einen Aktors bei von dem Kühlsystem temperaturbedingt geforderter Öffnungsstellung der Verschlussklappen (2.2) durchgeführt wird.

4. Verfahren nach einem der vorhergehenden Ansprüche,
**dadurch gekennzeichnet, dass** der Referenzbewegungsablauf des zumindest einen Aktors in Abhängigkeit einer erfassten Umgebungstemperatur durchgeführt wird.

## Claims

1. Method for operating a radiator grille arrangement (2) of a vehicle (1), comprising at least one main air inlet and a number of closure flaps (2.2), which are moved by means of at least one actuator between a closed position and an open position,
wherein a reference motion sequence of the at least one actuator is realised in dependence on a predefined temperature, **characterised in that**, in the reference motion sequence, the closure flaps, for referencing the actuator, are moved from the closed position into the open position and back.

2. Method according to claim 1,
**characterised in that** the reference motion sequence of the at least one actuator is realised in dependence on a detected temperature of a coolant circulating in a cooling system of the vehicle (1).

3. Method according to claim 2,
**characterised in that** the reference motion sequence of the at least one actuator is realised in the open position of the closure flaps (2.2) that is required by the cooling system based on temperature.

4. Method according to one of the preceding claims,
**characterised in that** the reference motion sequence of the at least one actuator is realised in dependence on a detected ambient temperature.

## Revendications

1. Procédé de fonctionnement d'un système (2) de calandre d'un véhicule automobile (1) qui comprend au moins une arrivée d'air principale et une pluralité de clapets (2.2) de fermeture, qui se déplacent au moyen d'au moins un actionneur d'une position de fermeture à une position d'ouverture, une séquence de mouvement de référence de l'au moins un actionneur étant réalisée en fonction d'une température prédéfinie, **caractérisé en ce que** lors de la séquence de mouvement de référence les clapets de fermeture destinés à référencer l'actionneur sont ramenés depuis la position de fermeture dans la position d'ouverture.

2. Procédé selon la revendication 1, **caractérisé en ce que** la séquence de mouvement de référence de l'au moins un actionneur est réalisée en fonction d'une température détectée d'un liquide de refroidissement circulant dans un système de refroidissement du véhicule automobile (1).

3. Procédé selon la revendication 2, **caractérisé en ce que** la séquence de mouvement de référence de l'au moins un actionneur est réalisée lorsque la position d'ouverture des clapets de fermeture (2.2) est exigée par le système de refroidissement en fonction de la température.

4. Procédé selon l'une quelconque des revendications précédentes, **caractérisé en ce que** la séquence de mouvement de référence de l'au moins un actionneur est réalisée en fonction d'une température ambiante détectée.
